# EUROPEAN PATENT APPLICATION

(11) **EP 2 757 435 A2**
(43) Date of publication of application: **23.07.2014**
(21) Application number: 14151798.7
(22) Date of filing: 20.01.2014
(51) Int. Cl.: G05D 23/19, F24F 11/00

(54) **A controller configured to receive blower volumes for different operating modes per zones, a HVAC system including the controller and a method of operating the controller**

(30) Priority: 21.01.2013 US 201361754932 P; 28.06.2013 US 201313931392
(71) Applicant: Lennox Industries Inc., Richardson, TX 75080 (US)
(72) Inventor: Hrejsa, Pete, Richardson, TX 75080 (US); Charavda, Jay, Carrollton, TX 75006 (US); Golden, Kyle, Richardson, TX 75080 (US); Sakai, Takeshi, Carrollton, TX 75006 (US); Castillo, Daniel, Carrollton, TX 75006 (US)
(74) Representative: Williams, David John

(57) **Abstract**

Provided herein is an HVAC controller that receives blower volumes for different operating modes per HVAC zones, a HVAC system including the same and a method of operating the controller. In one embodiment, the controller includes: (1) an interface configured to receive blower volumes for each zone of the HVAC system that correspond to operating modes thereof of the HVAC system, wherein the blower volumes are received via a single graphical user interface and (2) a processor configured to direct operation of a circulation fan of the HVAC system based on at least one of the blower volumes.

## Description

### CROSS-REFERENCE TO RELATED APPLICATION

This application claims the benefit of U.S. Provisional Application Serial No. 61/754,932, filed by Charavda, et al., on January 21, 2013, entitled "USER INTERFACE SCREENS AND CONTROLLER FOR HVAC SYSTEM," commonly assigned with this application and incorporated herein by reference.

### TECHNICAL FIELD

This application is directed, in general, to heating, ventilating and air conditioning (HVAC) systems and, more specifically, to zoned HVAC systems.

### BACKGROUND

HVAC systems are used to regulate environmental condition within an enclosed space. Typically, HVAC systems have a circulation fan that pulls air from the enclosed space through ducts and pushes the air back into the enclosed space through additional ducts after conditioning the air (e.g., heating, cooling, humidifying or dehumidifying the air). To direct operations of HVAC components including a circulation fan, each HVAC system includes at least one HVAC controller. For zoned HVAC systems, the HVAC controllers calculate, whenever conditioning is requested, the volume of air that is needed for conditioning the requesting zone(s). The calculated value is sent to the blower to generate and provide the corresponding volume of air to be dispersed to the conditioning requested zones.

### SUMMARY

In one aspect, a HVAC system having a circulation fan is disclosed. In one embodiment, the HVAC system includes: (1) a controller having (1A) an interface configured to receive, via a single graphical user interface, blower volumes for the circulation fan that correspond to each operating mode of the HVAC system per each zone of the HVAC system and (1B) a processor configured to direct operation of the circulation fan based on at least one of the blower volumes in response to a thermostat call.

In another aspect, a controller for an HVAC system is disclosed. In one embodiment, the controller includes: (1) an interface configured to receive blower volumes for each zone of the HVAC system that correspond to operating modes thereof of the HVAC system, wherein the blower volumes are received via a single graphical user interface and (2) a processor configured to direct operation of a circulation fan of the HVAC system based on at least one of the blower volumes.

In yet another aspect, a graphical user interface for an HVAC system is provided. In one embodiment, the graphical user interface includes: (1) air flow input areas configured to receive blower volumes for each zone of the HVAC system, (2) an operating mode input area configured to indicate an operating mode of the HVAC system and (3) start input areas configured to initiate operation of a circulation fan of the HVAC system based on the blower volumes and the operating mode.

### BRIEF DESCRIPTION

Reference is now made to the following descriptions taken in conjunction with the accompanying drawings, in which:
FIG. 1 is a high-level block diagram of an embodiment of a HVAC system constructed according to the principles of the disclosure;
FIG. 2 is a block diagram of an embodiment of a controller constructed according to the principles of the disclosure; and
FIG. 3 illustrates an example of an embodiment of a single interface screen configured to receive blower volumes to be used by a controller of a HVAC system according to the principles of the disclosure.

### DETAILED DESCRIPTION

During installation, an installer selects different air flows for each zone that corresponds to each operating mode of the HVAC system. Typically, this is done using jumpers and tags on the hardware boards of the HVAC controller. This procedure can be cumbersome and time consuming; especially when the hardware boards are located in an attic or in a basement.

This disclosure provides an improved scheme for setting blower volumes for the different zones and operating modes of an HVAC system. An improved controller and interface is provided that allows an installer to enter, modify and test the blower volumes per zone for a circulation fan for each of the operating modes. The disclosed interface allows each of the blower volumes to be modified by increasing or decreasing the air flow for each operating mode and for each zone. In one embodiment, a single user interface is disclosed that allows entering, modifying, testing and saving the various blower volumes. Accordingly, the disclosed features and schemes provide an improved system and method for obtaining the optimal blower volumes for each operating mode per zone.

A thermostat call as used herein is based on an environmental setting such as a temperature or a humidity. The thermostat calls include, for example, heating demands, cooling demands and dehumidifying demands. A thermostat call can be generated by, for example, a thermostat or a comfort sensor.

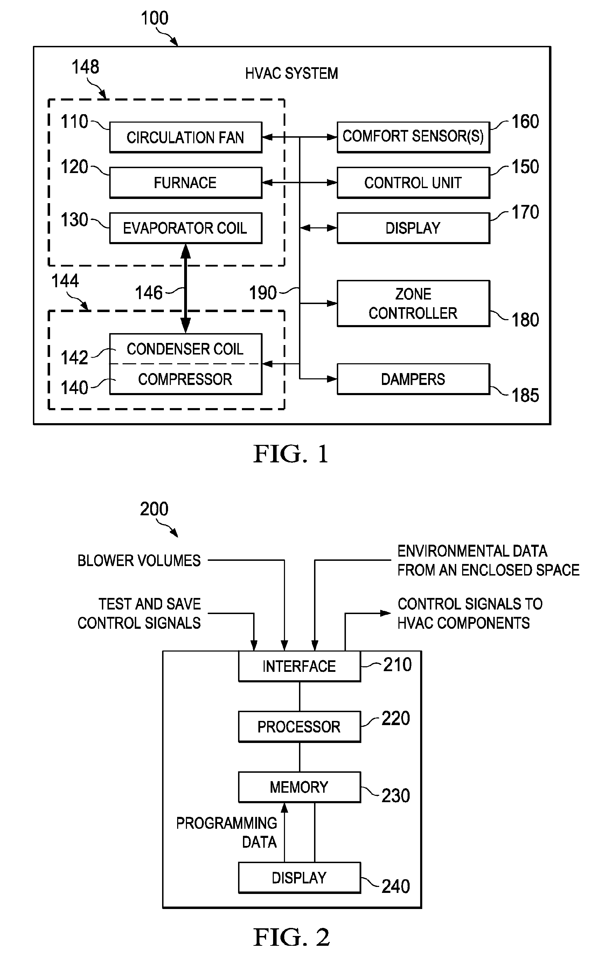

FIG. 1 is a high-level block diagram of an embodiment of a HVAC system 100, constructed according to the principles of the disclosure. The HVAC system 100 is a networked HVAC system configured to condition air within an enclosed space, such as a house, an office building, a warehouse, etc. The HVAC system 100 includes multiple components with a single one of some of the components in FIG. 1 being represented. One skilled in the art will understand that multiple of the same components can be included. One skilled in the art will also understand the HVAC system 100 can include other components that are not illustrated but typically included with an HVAC system.

The HVAC system 100 is a zoned system. As such, multiple comfort sensors 160 and dampers 185 are denoted. The HVAC system 100 also includes a circulation fan 110, a furnace 120, typically associated with the circulation fan 110, and a refrigerant evaporator coil 130, also typically associated with the circulation fan 110. The circulation fan 110, furnace 120, and refrigerant evaporator coil 130 are collectively referred to as the "indoor unit." This embodiment of the system 100 also includes a compressor 140 and an associated condenser coil 142, which are typically referred to as the "outdoor unit" 144. The compressor 140 and associated condenser coil 142 are typically connected to an associated evaporator coil 130 by a refrigerant line 146.

The circulation fan 110, sometimes referred to as a blower, can operate at different capacities, i.e., motor speeds, to circulate air through the HVAC system 100, whereby the circulated air is conditioned and supplied to the conditioned enclosed space. The circulation fan 110 moves the air at a certain capacity according to a blower volume. The blower volumes for a circulating fan are usually stored in an indoor controller of a HVAC system, such as control unit 150. The blower volume is the airflow capacity or rate (often expressed in terms of cubic feet per minute, or CFM) of the circulating fan 110.

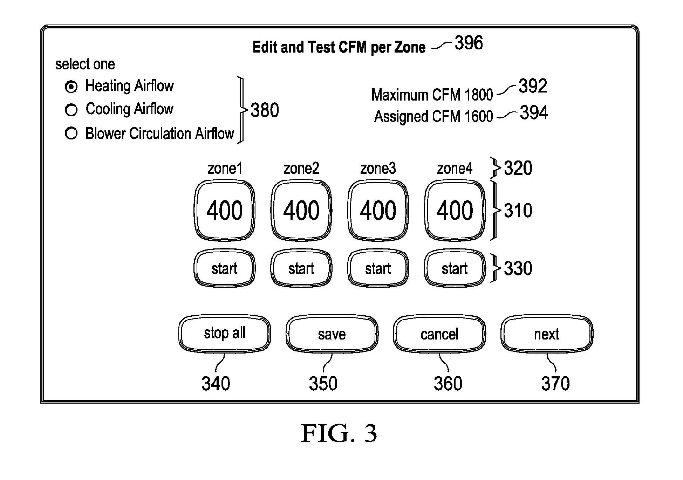

The control unit 150 is configured to control the circulation fan 110, the furnace 120 and/or the compressor 140 to regulate the temperature of the enclosed space, at least approximately. The control unit 150 may be an integrated controller or a distributed controller that directs operation of the HVAC system 100. The control unit 150 may include an interface to receive thermostat calls, blower control signals, and blower volumes for various zones and operating modes of the HVAC system. The control unit 150 also includes a processor, such as a microprocessor, to direct the operation of the HVAC system 100. The processor can be configured to direct operation of the circulation fan 110 per blower volumes entered during installation of the HVAC system 100. The graphical user interface 300 of FIG. 3 can be used to receive the various blower volumes that are used by the processor. The control unit 150 may include a memory section having a series of operating instructions stored therein that direct the operation of the control unit 150 (e.g., the processor) when initiated thereby. The series of operating instructions may represent algorithms that are used to control the blower volume of the circulation fan 110. The memory or another memory of the control unit 150 is also configured to store the various blower volumes for each of the zones of the HVAC system for each of the operating modes.

The HVAC system 100 also includes comfort sensors 160 that may be associated with the control unit 150 and also optionally associated with a display 170. The comfort sensors 160 provide current information, environmental data, about environmental conditions within zones of the enclosed space, such as temperature, humidity and air quality to the control unit 150 and display 170. For example, with respect to FIG. 3, the HVAC system 100 may include four comfort sensors 160.

In various embodiments, the display 170 provides additional functions such as operational, diagnostic and status message display and an attractive, visual interface that allows an installer, user or repairman to perform actions with respect to the HVAC system 100 more intuitively. In some embodiments, the display 170 is a thermostat for the HVAC system 100. In other embodiments, the display 170 is associated with a controller of the HVAC system 100, such as the control unit 150. Herein, the term "user" will be used to refer collectively to any of an installer, a tester, a user, an operator, a repairman, etc., unless clarity is served by greater specificity.

The zone controller 180 is configured to manage the movement of conditioned air to the designated zones of the enclosed space. Each of the designated zones include at least one demand unit, such as the furnace 120, and at least one user interface, such as a thermostat. The zone controlled HVAC system 100 allows a user to independently control the temperature in the designated zones. The zone controller 180 operates electronic dampers 185 to control air flow to the zones of the enclosed space. The zone controller 180 generates a blower control signal to request a blower volume for the circulation fan 110. The blower control signal can represent the blower volumes entered via a user interface screen such as the graphical user interface 300 in FIG. 3. In some embodiments, the zone controller 180 is configured to provide greater air flow for one zone than another zone to compensate for greater demands or air flow requirements. The zone controller 180 can be a conventional controller for delivering conditioned air to designated zones of a conditioned space. Harmony III™ Zone Control System available from Lennox Industries, Inc. of Richardson, Texas, is an example of a zoning system that employs a zone controller to manage the distribution of conditioned air to designated zones.

The blower control signal is typically an electrical signal generated by a zoning control panel in response to thermostat demands from different zones. The blower control signal can be an analog or a digital signal. Considering the Harmony III™ Zone Control System, a pulse width modulated (PWM) signal is used for a blower control signal and a change in the duty cycle of the PWM signal indicates a change in the operating speed of the circulation fan. In other embodiments, the blower control signal can be a data signal including a messaging protocol signal, such as a controller area network (CAN) signal, or an output of a transducer. As noted above, the blower control signal can reflect the blower volumes received via the interface of the control unit 150. These can be input by an installer employing a single user interface such as the graphical user interface 300.

A data bus 190, which in the illustrated embodiment is a serial bus, couples the various components of the HVAC system 100 together such that data may be communicated therebetween or thereamong. As will be understood, the data bus 190 may be advantageously employed to convey one or more alarm messages or one or more diagnostic messages. In some embodiments, the connections therebetween are through a wired-connection. A conventional cable and contacts may be used to couple the indoor unit controller 150 to the various components. In some embodiments, a wireless connection may also be employed to provide at least some of the connections.

In different embodiments, the control unit 150, the display 170 and the zone controller 180 can be a HVAC controller. As such, either one of the control unit 150, the display 170 or the zone controller 180 can be configured to perform all or a portion of the features described herein. FIG. 2 provides additional information of an embodiment of a HVAC controller.

FIG. 2 illustrates a block diagram of an embodiment of a controller 200 of a HVAC system constructed according to the principles of the disclosure. The controller 200 is configured to receive blower volumes for each zone and operating mode of the HVAC system and direct operation of a circulation fan of the HVAC system per the blower volumes. The blower volumes are typically entered during installation of the HVAC system. The graphical user interface 300 of FIG. 3 can be used to receive the blower volumes.

The controller 200 includes an interface 210, a processor 220, a memory 230 and a user display 240. Additionally, the controller 200 may comprise additional components typically included within a controller for a HVAC system, such as a power supply or power port. In different embodiments, the controller 200 can be a control unit, a zone controller or a thermostat of a HVAC system.

In one embodiment, each of the components in the controller 200 is operatively coupled to each other via conventional means to communicate information. While all of the components can be contained in one enclosure, in some embodiments, some of these components may be located outside the enclosure while being operatively coupled to other components. Also in some embodiments, a HVAC system has multiple controllers based on the structure or the number of zones of the enclosed space in which the HVAC system is applied.

The interface 210 of the controller 200 serves as an interface between the controller 200 and the HVAC components. The interface 210 is configured to receive environmental data such as temperature, humidity and etc. from sensors, such as comfort sensors, located throughout the enclosed space and transmit control signals that represent instructions to perform services to the respective HVAC components. In one embodiment, the environmental data and control signals are communicated via a data bus such as the data bus 190 of FIG. 1.

The interface 210 is also configured to receive blower volumes that correspond to zones of the HVAC system and enclosed space. The blower volumes can be received during installation. In one embodiment, the interface 210 receives the blower volumes via a single user interface screen. Via the single user interface screen, the interface 210 can also receive test control signals that the processor 220 employs to operate a circulation fan of the HVAC system. This assists an installer in determining the proper blower volumes for the various zones and operating modes of the HVAC system. The interface 210 can also receive a save signal via the single user interface screen that directs the controller 200 to save the optimal blower volumes determined during testing and installation. The single user interface screen can be, for example, the graphical user interface 300. Inputs from the graphical user interface 300 could also be represented as being received from the display 240.

The processor 220 of the controller 200 directs the operation of the controller 200 and instructs other HVAC components based on programming data. The programming data includes program schedule events (e.g., temperature setpoints, system modes, fan modes) in the HVAC system 100. The programming data can be input via the display 240. The processor 220 can receive other inputs via the display 240 that direct the operation of the processor 220. These inputs can be from the single interface screen and include the set blower volumes for each zone in the enclosed space, the testing control signals and the save control signals. Thus, the processor 220 can also direct the operation of the HVAC system 100 based on test control signals generated during installation of the HVAC system. The processor 220 may be a conventional processor such as a microprocessor.

The memory 230 may be a conventional memory typically located within the controller, such as a microcontroller, that is constructed to store the programming data. The memory 230 may store operating instructions such as control signals to direct the operation of the processor 220 when initiated thereby. The operating instructions may correspond to algorithms that provide the functionality of the operating schemes disclosed herein.

The display 240 visually provides information to a user and allows interaction with the user. In one embodiment, the display 240 can provide a setup screen that allows the user to enter the programming data. In addition to the setup screen, the display 240 can provide other screens such as operational, diagnostic and status message screens. In one embodiment, the display 240 provides the graphical user interface 300 that provides a single screen for ease of installation of the HVAC system.

FIG. 3 illustrates a view of an embodiment of a graphical user interface 300 constructed according to the principles of the disclosure. The graphical user interface 300 provides a single interface screen configured to allow a user to enter, test, modify and save blower volumes for each individual zone of an HVAC system and for each operating mode of the HVAC system. The graphical user interface 300 is configured to allow testing of air flow for each zone of the HVAC system according to a corresponding one of the blower volumes.

The graphical user interface 300 includes air flow input areas 310 configured to receive the blower volumes, action input areas configured to initiate actions associated with the HVAC system and information areas that indicate particular values or selections associated with the HVAC system. The action input areas include start input areas 330, a stop input area 340, a save input area 350, a cancel input area 360 and a next input area 370. The information areas include zone designated fields 320, an operating mode input area 380, a maximum blower volume indicator 392, an assigned blower volume indicator 394 and a title 396.

Each of the air flow input areas 310 correspond to a particular zone of the HVAC system and are configured to receive a blower volume for that particular zone of the HVAC system. Each of the airflow input areas 310 are modifiable during air flow testing of each of the zones for each of the operating modes. The zone designated fields 320 indicate each of the zones of the HVAC system that correspond to each of the air flow input areas 310. A user can change the blower volumes in the air flow input areas 310 by touching the designated areas to increase or decrease the displayed blower volumes. In some embodiments, the blower volumes increment or decrement at predetermined values, such as one, five, ten, fifty, etc. In some embodiments, the blower volumes may only increment of decrement wherein a user cycles through until obtaining the desired setting.

The action input areas initiate an action when activated. In some embodiments, the action input areas can be activated when touched or pressed. In other embodiments a user input device, such as a keypad, touchpad, stylus pen, etc., can be used to activate the action input areas, air flow input areas 310 or portions of the information areas if applicable. Activation of the action input areas can be determined based on the type of display in which the graphical user interface 300 is employed.

The start input areas 330 are configured to initiate operation of a circulation fan of the HVAC system based on the blower volumes and the operating mode. For example, activating the start input area for zone 1 initiates the circulation fan of the HVAC system at a blower volume of 400 CFM. Activation of multiple ones of the start input areas 330 causes the circulation fan to operate at a cumulative total of those zones that are activated. Continuing the above example, further activation of the start input area for zone 3 causes the circulation fan to operate at 800 CFM. In some embodiments, the start input areas 330 are also configured to stop operation or reduce the blower volume with respect to a zone area that is already activated. As such, each of the start input areas 330 operate as a toggle switch and can control the overall blower volume of the circulation fan with respect to the entered blower volume in the corresponding air flow input areas 310.

The stop input area 340 is configured to end operation of the circulation fan. Accordingly, the stop input area 340 provides a single input area that shuts down the circulation fan without having to individually deactivate each of the start area inputs 330.

The save input area 350 is configured to initiate storing the blower volumes in a memory of an HVAC controller. Accordingly, a user can test air flows with different blower volumes for the different operating modes and activate the save input area 350 to save the desired entered values for the blower volumes after testing. The memory can be a conventional memory of the HVAC controller.

The cancel input area 360 is configured to clear the entered blower volumes from the air flow input areas 310. The next input area 370 is configured to transition to another input screen. Typically the other input screen is an additional user interface screen that is used by an installer during installation.

The operating mode input area 380 is configured to indicate an operating mode of the HVAC system that corresponds to the blower volume values displayed in the air flow input areas 310. Additionally, the operating mode input area 380 is configured to provide multiple operating modes of the HVAC system and receive a selection for a particular one of the operating modes. With the different selections made available, an installer can select each of the operating modes and for each of the operating modes enter and test different blower volumes for the different zones. The installer can then save all of the settings for the blower volumes.

The maximum blower volume indicator 392 visually indicates to a user the maximum blower volume for the particular circulation fan being controlled. The assigned blower volume indicator 394 provides a visual indication of the cumulative blower volume for the indicated operating mode noted in the operating mode input area 380.

The title 396 indicates the subject of the particular graphics user interface 300. This is helpful when viewing multiple screens during installation of the HVAC system.

The above-described apparatuses, methods or interface screens may be embodied in, provide by or performed by various conventional digital data processors, microprocessors or computing devices, wherein these devices are programmed or store executable programs of sequences of software instructions to perform one or more of the steps of a method or provide an interface screeen. The software instructions of such programs may be encoded in machine-executable form on conventional digital data storage media that is non-transitory, e.g., magnetic or optical disks, random-access memory (RAM), magnetic hard disks, flash memories, and/or read-only memory (ROM), to enable various types of digital data processors or computing devices to perform one, multiple or all of the steps of one or more of the above-described methods or to provide one of the described interface screens. Additionally, an apparatus, such as control unit, may be designed to include the necessary circuitry or programming to perform each step of a method of disclosed herein or provide a single user interface as disclosed.

Portions of disclosed embodiments may relate to computer storage products with a non-transitory computer-readable medium that have program code thereon for performing various computer-implemented operations that embody a part of an apparatus, system, carry out the steps of a method set forth herein or provide a single user interface screen as disclosed. Non-transitory used herein refers to all computer-readable media except for transitory, propagating signals. Examples of non-transitory computer-readable media include, but are not limited to: magnetic media such as hard disks, floppy disks, and magnetic tape; optical media such as CD-ROM disks; magneto-optical media such as floptical disks; and hardware devices that are specially configured to store and execute program code, such as ROM and RAM devices. Examples of program code include both machine code, such as produced by a compiler, and files containing higher level code that may be executed by the computer using an interpreter.

Those skilled in the art to which this application relates will appreciate that other and further additions, deletions, substitutions and modifications may be made to the described embodiments.

## Claims

1. A HVAC system having a circulation fan, said system comprising:
a controller having:
an interface configured to receive, via a single graphical user interface, blower volumes for said circulation fan that correspond to each operating mode of said HVAC system per each zone of said HVAC system; and
a processor configured to direct operation of said circulation fan based on at least one of said blower volumes in response to a thermostat call.

2. A controller for an HVAC system, comprising:
an interface configured to receive blower volumes for each zone of said HVAC system that correspond to operating modes thereof of said HVAC system, wherein said blower volumes are received via a single graphical user interface; and
a processor configured to direct operation of a circulation fan of said HVAC system based on at least one of said blower volumes.

3. The controller as recited in Claim 2, wherein said processor is configured to test said circulation fan according to each one of said blower volumes.

4. The controller as recited in Claim 2 wherein said interface is further configured to receive at least one test input that corresponds to one of said blower volumes, said processor configured to operate said circulation fan at said one of said blower volumes that correspond to said at least one test input.

5. The controller as recited in Claim 2 wherein said interface is configured to receive multiple test inputs that each correspond to a specific one of said blower volumes, said processor configured to operate said circulation fan based on a sum of each of said specific one of said blower volumes.

6. The controller as recited in Claim 2 further comprising a memory configured to store said blower volumes when said interface receives a save input from said single graphical user interface.

7. The controller as recited in Claim 2 wherein said processor is further configured to stop operation of said circulation fan when said interface receives a stop input from said single graphical user interface.

8. The controller as recited in Claim 2 wherein said interface is configured receive a cancel input from said single graphical user interface that changes said blower volumes.

9. A graphical user interface for an HVAC system, comprising:
air flow input areas configured to receive blower volumes for each zone of said HVAC system;
an operating mode input area configured to indicate an operating mode of said HVAC system; and
start input areas configured to initiate operation of a circulation fan of said HVAC system based on said blower volumes and said operating mode.

10. The graphical user interface as recited in Claim 9 configured to allow testing of air flow for said each zone according to a corresponding one of said blower volumes.
